# EUROPÄISCHE PATENTSCHRIFT

(11) **EP 1 202 651 B1**
(45) Veröffentlichungstag und Bekanntmachung des Hinweises auf die Patenterteilung: **01.10.2003**
(21) Anmeldenummer: 00953044.5
(22) Anmeldetag: 13.07.2000
(51) Int. Cl.: A47B 96/07, A47B 96/02

(54) **BEFESTIGUNGSWINKEL**
ANGLE BRACKET
EQUERRE DE FIXATION

(30) Priorität: 10.08.1999 DE 29913904 U
(43) Veröffentlichungstag der Anmeldung: 08.05.2002
(73) Patentinhaber: fischerwerke Artur Fischer GmbH & Co. KG, 72178 Waldachtal (DE)
(72) Erfinder: LIND, Stefan, D-72178 Waldachtal (DE)
(86) Internationale Anmeldenummer: EP0006699
(87) Internationale Veröffentlichungsnummer: WO01010270

(56) Entgegenhaltungen:
- DE-A- 3 504 728
- DE-U- 9 217 198
- FR-A- 2 278 887
- GB-A- 173 005

## Beschreibung

Die Erfindung betrifft einen Befestigungswinkel. Derartige Befestigungswinkel sind zur Befestigung beispielsweise von Regalbrettern an einer Wand oder zur Befestigung sonstiger, insbesondere plattenförmiger Bauteile in einem Winkel aneinander bekannt.

Aus GB-A-173 005 ist ein Befestigungswinkel bekannt, die im Wesentlichen aus zwei identischen, getrennten Schenkeln bestehen, welche gegeneinander verschwenkbar und mittels einer Schraubenverbindung feststellbar sind. Hierdurch kann der Befestigungswinkel auch zum Verbinden zweier Bauteile verwendet werden, die nicht in einem Winkel von 90° zueinander stehen. Die Druckschrift sieht einen Aufbau der Schenkel aus je zwei Blechstücken vor, deren eines Blechstück die Anlagefläche zu dem zu befestigenden Bauteil bildet und dessen anderes Blechstück als Haltebügel senkrecht hierzu steht und ein gekrümmtes Langloch aufweist. Die Verbindung und flexible Einstellung der beiden Schenkel erfolgt durch eine Schraubenverbindung durch die Langlöcher von je zwei aneinander liegenden Haltebügeln. Daraus ergibt sich ein erheblicher Fertigungsaufwand bei der Verbindung der Blechstücke zu einem stabilen Schenkel, beispielsweise durch Schweißen, Nieten oder dgl.

Der Erfindung liegt die Aufgabe zugrunde, einen derartigen Befestigungswinkel vorzuschlagen, der einfacher herstellbar ist.

Diese Aufgabe wird erfindungsgemäß durch die Merkmale des Anspruchs 1 gelöst. Der erfindungsgemäße Befestigungswinkel weist zwei Schenkel auf, deren Winkelstellung zueinander durch Verschwenken der Schenkel verstellbar ist. Die Schenkel des erfindungsgemäßen Befestigungswinkels lassen sich auf Winkel abweichend von den üblichen 90° einstellen. Die Schenkel des Befestigungswinkels sind aneinander feststellbar, um einen eingestellten Winkel unverändert beizubehalten. Der erfindungsgemäße Befestigungswinkel hat den Vorteil, dass er die Befestigung zweier Teile aneinander in einem einstellbaren und demzufolge wählbaren Winkel zueinander ermöglicht.

Die beiden Schenkel des Befestigungswinkels sind im Wesentlichen identisch miteinander. Dies verringert die Anzahl unterschiedlicher Bauteile auf eins, nämlich die baugleichen Schenkel. Herstellungsaufwand und Herstellungskosten reduzieren sich dadurch. Die Einschränkung "im Wesentlichen identisch" ist dafür vorgesehen, kleinere Abweichungen der beiden Schenkel des Befestigungswinkels voneinander wie beispielsweise ein nur in einem der beiden Schenkel angebrachtes Gewinde nicht vom Schutzbereich auszuschließen.

Die Schenkel des Befestigungswinkels weisen eine über ihre Breite nach Form und Größe gleichbleibende Längsschnittfläche auf. Die Schenkel lassen sich dadurch in einem kontinuierlichen Durchzieh- oder Durchdrückverfahren als Profilstange herstellen, von der die Schenkel abgetrennt werden. Die Herstellung der Schenkel und damit des Befestigungswinkels ist auf diese Weise kostengünstig möglich.

Die Erfindung wird nachfolgend anhand eines in der Zeichnung dargestellten Ausfünrungsbeispiels näher erläutert. Es zeigen:
- Figur 1: einen erfindungsgemäßen Befestigungswinkel in perspektivischer Darstellung; und
- Figur 2: den Befestigungswinkel aus Figur 1 in Seitenansicht.

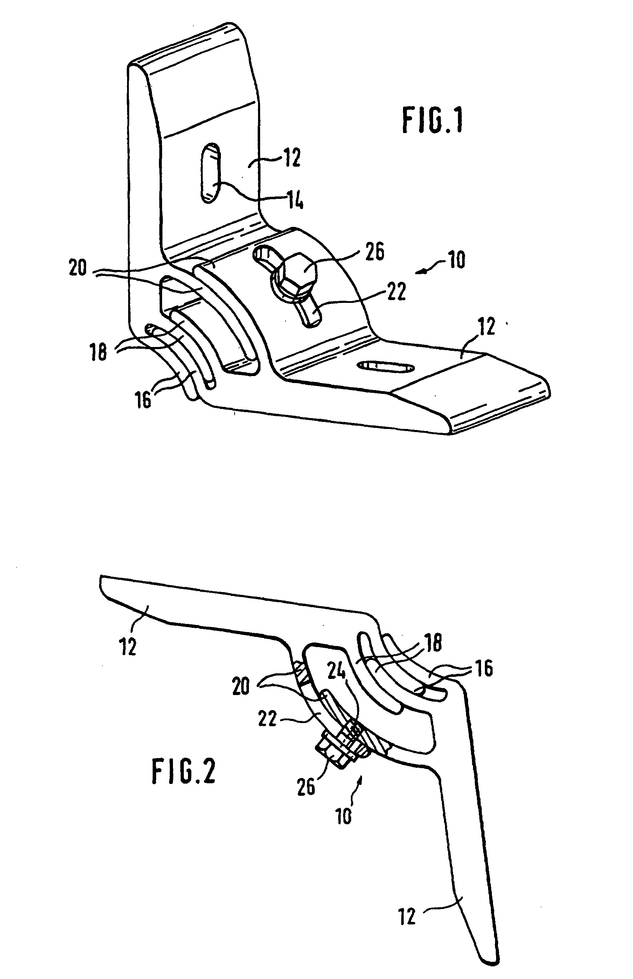

Der in der Zeichnung dargestellte, erfindungsgemäße Befestigungswinkel 10 ist aus zwei Schenkeln 12 zusammengesetzt. Die beiden Schenkel 12 sind aus Metall, beispielsweise aus einer Aluminiumlegierung, in einem Durchziehverfahren als Profilstange hergestellt und von dieser abgetrennt. Die beiden Schenkel 12 sind daher identisch ausgebildet und weisen über ihre gesamte Breite eine gleichbleibende Längsquerschnittfläche auf, die deckungsgleich mit der in Figur 2 gezeigten Seitenansicht der Schenkel 12 ist.

In jedem der Schenkel 12 ist ein Langloch 14 zur Verschraubung des Befestigungswinkels 10 mit zwei nicht dargestellten Bauteilen, die mit dem Befestigungswinkel 10 in einem Winkel zueinander verbunden werden sollen, angebracht.

Von jedem Schenkel 12 stehen drei kreisbogenförmige Laschen 16.18,20 zur selben Seite ab, die mit dem Schenkel 12 einstückig sind. Eine erste Lasche 16 ist am Ende des Schenkels 12 angeordnet. Zwischen der ersten Lasche 16 und der zweiten Lasche 18 besteht ein Spalt, dessen Breite einer Dicke dieser beiden Laschen 16,18 entspricht. Die dritte Lasche 20 ist mit etwas größerem Abstand zu den beiden anderen Laschen 16, 18 am Schenkel 12 angeordnet. Alle drei Laschen 16, 18, 20 erstrecken sich in Umfangsrichtung über weniger als einen Viertelkreisbogen, im dargestellten Ausführungsbeispiel erstrecken sich die drei Laschen 16, 18, 20 über einen Umfangswinkel zwischen etwa 70° bis knapp 90°.

In der dritten Lasche 20 des einen Schenkels 12 ist ein sich in Umfangsrichtung erstrekkendes Langloch 22 angebracht, in der dritten Lasche 20 des anderen Schenkels 12 ist ein Gewindeloch 24 angebracht. Die beiden Schenkel 12 sind in einem Winkel zueinander so zu dem erfindungsgemäßen Befestigungswinkel 10 zusammengesetzt, dass die erste Lasche 16 des einen Schenkels. 12 zwischen der ersten und der zweiten Lasche 16, 18 des anderen Schenkels 12 und umgekehrt, die zweite Lasche 18 des anderen Schenkels 12 zwischen der ersten und der zweiten Lasche 16, 18 des einen Schenkels 12 einliegt. Die beiden dritten Laschen 20 liegen flächig aneinander an. Die beiden Schenkel 12 lassen sich verschwenken und dadurch ihre Winkelstellung zueinander verändern. Dabei verschieben sich die ineinanderliegenden ersten und zweiten Laschen 16, 18 sowie die aneinander anliegenden dritten Laschen 20 der beiden Schenkel 12 zueinander. Durch das Langloch 22 in der dritten Lasche 20 des einen Schenkels 12 ist eine Feststellschraube 26 durchgesteckt und in das Gewindeloch 24 in der dritten Lasche 20 desanderen Schenkels 12 eingeschraubt Durch Festziehen der Feststellschraube 26 werden die beiden dritten Laschen 20 gegeneinander gespannt und die Schenkel 12 in ihrer Winkelstellung zueinander fixiert. Der Winkel, in dem die beiden Schenkel 12 des erfindungsgemäßen Befestigungswinkels 10 zueinander stehen, lässt sich verstellen und die Schenkel 12 sind im eingestellten Winkel zueinander feststellbar.

## Patentansprüche

1. Befestigungswinkel (10), der zwei gegeneinander verschwenkbare, feststellbare und im Wesentlichen identische Schenkel (12) aufweist, **dadurch gekennzeichnet, dass** die Schenkel (12) eine über ihre Breite gleichbleibende Längsschnittfläche aufweisen.

2. Befestigungswinkel nach Anspruch 1, **dadurch gekennzeichnet, dass** die beiden Schenkel (12) des Befestigungswinkels (10) kreisbogenförmig von ihnen abstehende Laschen (16, 18, 20) aufweisen, die ineinander greifen und/oder aneinander anliegen und die beiden Schenkel (12) schwenkbar aneinander führen.

## Claims

1. Angle fixing (10) having two substantially identical limbs (12) that can be pivoted relative to one another and locked in position, **characterised in that** the limbs (12) have a longitudinal sectional surface that is constant over their width.

2. Angle fixing according to claim 1, **characterised in that** the two limbs (12) of the angle fixing (10) have tongues (16, 18, 20) projecting arcuately therefrom, which tongues engage in one another and/or rest against one another and guide the two limbs (12) pivotally on one another.

## Revendications

1. Equerre de fixation (10), qui présente deux branches (12) essentiellement identiques, pouvant être pivotées l'une par rapport à l'autre et pouvant être immobilisées, **caractérisée en ce que** les branches (12) présentent une surface de section longitudinale constante sur leur largeur.

2. Equerre de fixation selon la revendication 1, **caractérisée en ce que** les deux branches (12) de l'équerre de fixation (10) présentent des pattes (16, 18, 20) qui font saillie des branches en arc de cercle, s'engagent les unes dans les autres et/ou s'appliquent les unes contre les autres, et guident les deux branches (12) à pivotement l'une contre l'autre.
